(19) **Europäisches Patentamt**
**European Patent Office**
**Office européen des brevets**

(11) **EP 1 729 566 B1**

(12) **EUROPEAN PATENT SPECIFICATION**

(45) Date of publication and mention of the grant of the patent:
**23.01.2008 Bulletin 2008/04**

(51) Int Cl.:
***A01K 15/02*** *(2006.01)*

(21) Application number: **05729434.0**

(22) Date of filing: **22.03.2005**

(86) International application number:
**PCT/GB2005/001091**

(87) International publication number:
**WO 2005/092087 (06.10.2005 Gazette 2005/40)**

(54) **ANIMAL CHEW**

KAUSPIELZEUG FÜR TIERE

ARTICLES A MACHER POUR ANIMAUX

(84) Designated Contracting States:
**AT BE BG CH CY CZ DE DK EE ES FI FR GB GR HU IE IS IT LI LT LU MC NL PL PT RO SE SI SK TR**

(30) Priority: **22.03.2004 GB 0406426**

(43) Date of publication of application:
**13.12.2006 Bulletin 2006/50**

(73) Proprietor: **MARS, INCORPORATED**
**McLean, Virginia 22101 (US)**

(72) Inventor: **TURNER, Walter**
**Huddersfield,**
**West Yorkshire HD3 3UP (GB)**

(74) Representative: **Cockerton, Bruce Roger et al**
**Carpmaels & Ransford,**
**43-45 Bloomsbury Square**
**London WC1A 2RA (GB)**

(56) References cited:
**EP-A- 1 023 841       WO-A-03/088740**
**GB-A- 1 076 676       US-A1- 2003 168 020**
**US-A1- 2003 219 516**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to animal chews and, in particular, to dog chews, which have a long lasting time.

Most dogs enjoy chewing, and owners are therefore often keen to provide suitable chewing products for their animals. Some chewing products are made from materials such as plastics, which are essentially inedible (although dogs may sometimes swallow them) and are indigestible. Such chewing products lack nutritional value and are tasteless and unpalatable to many dogs. Rawhide chews are also commonly available. However, such chews are similarly indigestible and of low palatability. This can lead to the additional negative consequence that a soggy, partially chewed product is left behind by the dog. This can be unhygienic and unpleasant for the owner.

In addition, indigestible chews can have adverse effects on the dog's digestion once swallowed: such chews can become impacted in the dog's intestinal tract with life-threatening consequences.

There is therefore a desire amongst dog owners for products that are fully edible. There exist several products which, to this end, are made predominantly from food ingredients. US 5,827,565 and US 6,086,940 relate to dog chews which are made predominantly of starch and which have the additional property that their texture can be easily heat-modified, for example, by microwave radiation. Such chews suffer the disadvantage that they are either too hard or too soft. In the case of hard chews, young dogs with insufficiently developed teeth or old dogs with decayed or missing teeth might be unable to chew on the product at all. In some cases hard chews can pose a risk to the dog's health, for example through slab fractures of the teeth. Soft chews are a problem because they are eaten very quickly by the dog and are not chewed for a sufficient amount of time. Owners are often left dissatisfied if their dog rapidly chews the product they have purchased, often at a significant cost, rather than enjoying the chew for a longer time.

There is therefore a desire to manufacture animal chew products that are edible but are of a consistency that is neither dangerously hard nor allows rapid consumption. US 4,364,925 relates to chews which seek to meet this aim as a result of their high fibre content. Unfortunately this approach can lead to problems in a dog's digestive tract: for example the dog's faeces can be of poor quality or the dog can develop wind which is very unpleasant for the owner.

EP 0909536 describes pet food that is made from an insoluble fibre, a denatured protein source, a gelatinized carbohydrate matrix, and a humectant. The food is designed to allow pieces of the pet food to retain their integrity under the force of the dog's bite so as to confer dental cleaning as the dog bites into the food. These products are intended as food and are not designed for prolonged chewing. EP 1219177 relates to products with high degrees of gelatinization but similarly relates to a pet foods rather than chews with long-lasting properties. An animal "chew" is quite distinct from animal "food", and the two differ in terms of the size of the pieces and in terms of the time taken to consume the product.

With regard to the size of the pieces, the largest pieces in a "food" are smaller than those in a "chew". For instance, WO-01/50882 discloses a food product which is reported as having a large size compared to other dried pet food, and discloses several examples. The largest of these examples is a triangular kibble having the following dimensions: thickness 16 mm, base 28 mm and sides 32 mm. An animal chew has a largest dimension which is significantly larger. As used herein, a "chew" is an individual piece having a largest dimension of at least about 50mm, preferably at least about 60mm, and preferably at least about 70mm.

With regard to the time taken to consume the product, the animal will normally take much longer to consume a piece of "chew" than a piece of "food". A piece of "food" may generally be consumed in less than 30 seconds by an average size dog, whereas a "chew" would take at least 90 seconds to consume.

The references described above disclose a pet product which, whilst achieving various aims, fail to provide a pet chew which is both long lasting and edible, and which avoids or reduces the aforementioned health problems for the animal.

It has been found that by using gelatinized starch in an animal chew, the chew can be made both long lasting and edible, and avoids or reduces the health problems noted above.

WO 03/088740 discloses that gelatinized starch can be used in a pet's chew. However, its use to increase affect the lasting time of the chew is hitherto unknown.

US 2003/0219516 relates to pet chews with long lasting times and mentions gelatinization of starch in conjunction with glycerol. GB 1076676 discloses a preparation of animal foods involving gelatinized starch. EP 1023841 discloses confectionery products that may contain "from 0.5-20% (wt/wt) oxidised starch". US 2003/0168020 discloses a method in which the starch is gelatinized; in a specific example, the use of a single screw extruder is disclosed.

According to the present invention, there is provided the use of gelatinized starch for the purpose of increasing the lasting time of an animal chew wherein

the level of starch gelatinization is greater than 90% and

the starch is present in the animal chew at a level of at least 35%.

The animal chew may further comprise fibre (soluble or insoluble fibre), preferably an insoluble fibre. Particularly improved lasting time is achieved when the gelatinized starch is in combination with the fibre.

There is also herein disclosed a method of increasing the lasting time of an animal chew, characterised in that gelatinized starch is incorporated into the chew. There is also herein disclosed a method of manufacture of an animal chew having improved lasting time, characterised in that said method comprises the step of incorporating gelatinized starch therein.

The term "gelatinized starch" as used herein means starch that has been processed in the presence of water such that its native granular structure has been destroyed and that the crystalline regions of the starch have been melted. Importantly, the effect of such processing is to convert the native starch, which is essentially indigestible, into a form which is digestible. Measurements of starch gelatinization quoted herein are based upon a digestion test with amyloglucosidase, as described herein below.

As used herein, the "lasting time" of a chew refers to the time taken for the animal to completely consume the product, i.e. the time from when the animal first begins to chew the product to the time when the animal swallows the last pieces of the product.

The starch used may be one type of starch or may alternatively consist of a mixture of types of starches. The type(s) of starch(es) used may be derived from corn, wheat, modified wheat, potatoes, rice, oat, beets, barley, soy, other cereals or grains, and mixtures thereof. Tapioca starch, pea starch, mixtures thereof or mixtures of tapioca starch and/or pea starch and any of the aforementioned types may also be used. Pure or substantially pure starches may also be used if desired. The type(s) of starch(es) used may be characterised by starch profiles having all possible proportions of amylopectin, intermediates and amylose. The exact source(s) of starch used is not critical. In general the starch source (s) is(are) selected on the basis of cost and palatability considerations.

The fibre may be any suitable fibre. Examples of suitable fibres include soy fibre, rice hull fibre, pea hull fibre, oat hull fibre, barley hull fibre, sugar beet fibre, wheat bran fibre, fibres derived from animal tissue (for example from the skin, muscles, intestines, tendons, hides of animals), collagen and pure cellulose. A suitable cellulose fibre is Solka-Floc TM. The fibre is generally selected on the basis of cost and palatability considerations. However, a fibre which results in a lower density product is preferred; for example a cellulose fibre. Mixtures of fibres may be used. The fibre (s) is(are) preferably dispersed in the gelatinized starch. In one embodiment, the fibre contains lignin.

Various other ingredients, for example, protein sources (animal-derived, vegetable-derived or a mixture of the two), humectants, salt, spices, seasonings, vitamins, minerals, antioxidants, preservatives, flavouring agents, oils, fat, emulsifiers, lipids and the like may also be incorporated into the chew as desired. If added, the lipids may be any suitable animal fats, for example tallow, or may be vegetable fats.

A plasticizer may or may not be present in the animal chew. A plasticizer other than water may or may not be present in the animal chew. If a plasticizer is present, preferably it is mixed with the starch. Although water has suitable plasticizing qualities, as mentioned above, an additional plasticizer may be used. A preferred class of plasticizer is the class of polyols. This class comprises, amongst others, glycol, diethylene glycol, alkylene glycols, polyalkylene glycol, sorbitol, glycerol, glycerol mono-esters and the like. Other suitable classes of plasticizers include esters of citric acid and urea. If a plasticizer other than water is used, glycerol, glycol or a combination thereof is preferred.

In one embodiment, the animal chew includes no fibre and no plasticizer.

The chew may comprise an emulsifier. Suitable emulsifiers include lecithin and monoglycerides. Preferably, the emulsifier is lecithin. Preferably, an emulsifier will be present in an amount of from 0% to 10% by weight of the chew and more preferably 0% to 6% by weight.

In one embodiment of the invention the chew does not contain emulsifier in the range from 1 to 3% by weight of the chew. In another embodiment of the invention, the chew does not contain emulsifier in the range from I to 2% by weight of the chew. In another embodiment of the invention, the chew does not contain emulsifier in the range from 2 to 3% by weight of the chew. In another embodiment of the invention, the chew does not contain emulsifier in the range from 1.5 to 2.5% by weight of the chew. In another embodiment of the invention, the chew does not contain emulsifier in the range from 2 to 2.5% by weight of the chew. In another embodiment of the invention, the chew does not contain emulsifier in the range from 1.6 to 2.2% by weight of the chew. In another embodiment of the invention, the chew does not contain emulsifier in the range from 1.6 to 1.8% by weight of the chew. In yet another embodiment of the invention, the chew does not contain an emulsifier.

In one embodiment of the invention the chew does not contain lecithin in the range from 1 to 3% by weight of the chew. In another embodiment of the invention, the chew does not contain lecithin in the range from 1 to 2% by weight of the chew. In another embodiment of the invention, the chew does not contain lecithin in the range from 2 to 3% by weight of the chew. In another embodiment of the invention, the chew does not contain lecithin in the range from 1.5 to 2.5% by weight of the chew. In another embodiment of the invention, the chew does not contain lecithin in the range from 2 to 2.5% by weight of the chew. In another embodiment of the invention, the chew does not contain lecithin in the range from 1.6 to 2.2% by weight of the chew. In another embodiment of the invention, the chew does not contain lecithin in the range from 1.6 to 1.8% by weight of the chew. In yet another embodiment, the chew does not contain lecithin.

The chews of the present invention may be made according to any method conventional in the art. Extrusion gelatinization is found to be particularly suitable. In a specific example of a suitable extrusion gelatinization process, a dry feed mixture is prepared from the starch source in the form of a flour or meal, and optionally a fibre source. The dry feed mixture may then be fed into a preconditioner or straight into the extruder. In the preconditioner, water or steam, or both, is mixed into the dry feed mixture. Further, liquid flavour components, such as flavour digests or tallow, may be mixed into the dry feed mix in the preconditioner. Sufficient water and/or steam, and optionally liquid flavour components, is/are mixed into the feed mixture to raise the moisture content of the dry feed mixture. The moistened feed leaving the preconditioner is then fed into an extruder. The extruder may be any suitable single or twin screw cooking-extruder. Suitable extruders may be obtained from, for instance Wenger Manufacturing Inc, Clextral SA, Buhler AG. During passage through the extruder, the moistened feed passes through a cooking zone, in which it is subjected to mechanical shear and heat, and a forming zone. The gauge pressure in the forming zone is from about 600 kPa to about 10 MPa. The "forming zone" may also be known as the "pumping zone". If desired, water or steam, or both, may be introduced into the cooking zone. Other liquids, including humectants such as glycerol or glycol, may also be introduced into the extruder during cooking.

Further, during passage through the extruder, the starch ingredients of the moistened feed are gelatinized to provide the gelatinized starch matrix. The gelatinization of the starch is achieved by processing at elevated temperature, and controlling one or more of the cooking time, moisture and/or shear. Low moisture contents, such as those which prevail in many extrusion cookers (< ca. 30% and often < ca. 20% moisture) are generally unfavourable to starch gelatinization. Hence, many extrusion cookers rely upon the generation of a great deal of shear stress to mitigate the low moisture conditions and achieve high levels of starch gelatinisation (see "The Technology of Extrusion Cooking", N.D. Frame (Ed.). Blackie Academic and Professional, 1994, Chapter 3).

The degree of gelatinization of the starch affects the lasting time of the chew. In the present invention, the starch used has gelatinization levels of greater than 90%, preferably greater than 92.5%, preferably greater than 95%, preferably greater than 97.5%, preferably greater than 98%, and preferably at least 99% by weight. The use of starch with such gelatinization levels, and preferably in combination with fibre, causes the chews to be significantly long lasting.

The total proportion of starch in the chew is greater than or equal to 35% by weight. In one embodiment, the amount of starch is greater than or equal to 50%, and in a further embodiment greater than about 70%.

The fibre may be present in any amount. Preferably, the fibre forms 30% or less by weight of the chew, preferably 25% or less by weight, preferably 22.5% or less by weight, preferably 20% or less by weight, and preferably 18% or less by weight.

In an embodiment of the invention, the fibre is present in an amount of 2 to 20% by weight, and preferably 3 to 20% by weight. In a preferred embodiment, the fibre is present in an amount of 2 to 15% by weight of the chew, preferably 5 to 15%, preferably 5 to 12%, and most preferably 5% to 10% by weight of the chew.

In an alternative embodiment, the chew contains no fibre.

As mentioned above, the chew may comprise a plasticizer such as glycerol and/or glycol. Preferably, the plasticizer forms less than 35% by weight of the chew, more preferably less than 25% by weight, and more preferably less than 15% by weight.

The glycerol and/or glycol can function both as a plasticizer and a humectant. Preferably, the total amount of glycerol and/or glycol forms less than 35% by weight of the chew, more preferably less than 25% by weight, and more preferably less than 15% by weight.

In an embodiment of the invention, when the fibre forms 20% or less by weight of the chew, the plasticizer forms 25% or less by weight of the chew, preferably 20% or less by weight, preferably 15% or less by weight, preferably 12% or less by weight, and preferably 10% or less by weight.

In an embodiment of the invention, when the fibre forms 20% or less by weight of the chew, the total amount of glycerol and/or glycol is 25% or less by weight of the chew, preferably 20% or less by weight, preferably 15% or less by weight, preferably 12% or less by weight, and preferably 10% or less by weight.

In an embodiment of the invention, water forms 35% or less by weight of the chew. Preferably, water forms 25% or less by weight of the chew, more preferably 15% or less by weight, more preferably than 11% or less by weight, and more preferably 10% or less by weight. In a further embodiment, water forms 7% or less by weight of the chew, more preferably 6% or less by weight, more preferably 5% or less by weight, more preferably 4% or less by weight of the chew. In a further embodiment, water forms 3% or less by weight, typically 2% or less by weight, and more typically 1% or less by weight of the chew.

The component percentage values "by weight" or "by weight of the chew" recited herein are references to the weight of the component as a percentage of the weight of the final chew, i.e. its dry weight after manufacture. As noted above, the chews of the present invention are typically made via an extrusion process, in which solid and liquid components are mixed, and these components typically contain water. The manufacturing process typically drives off a proportion of any water present in this mixture within the extruder. Typically, the amount of water driven off as steam is small and is typically less than 5% by weight of the total solid and liquid components added to the extruder. As such, the weight percentage of a given component (other than water or starch) in the chew typically differs by about 2% or less, more typically 1% or less, and more typically about 0.5% or less from the weight percentage of that component in the mixture. The weight percentage of starch in the chew typically differs by about 4% or less, more typically 3% or less, more typically 2% or less, and more typically about 1% or less from the weight percentage of starch in the mixture.

The skilled person will appreciate that other components conventional in the art may also be present in the chew. These include the components mentioned in WO 03/088740.

The animal chew described herein is preferably a pet chew, and preferably a dog chew.

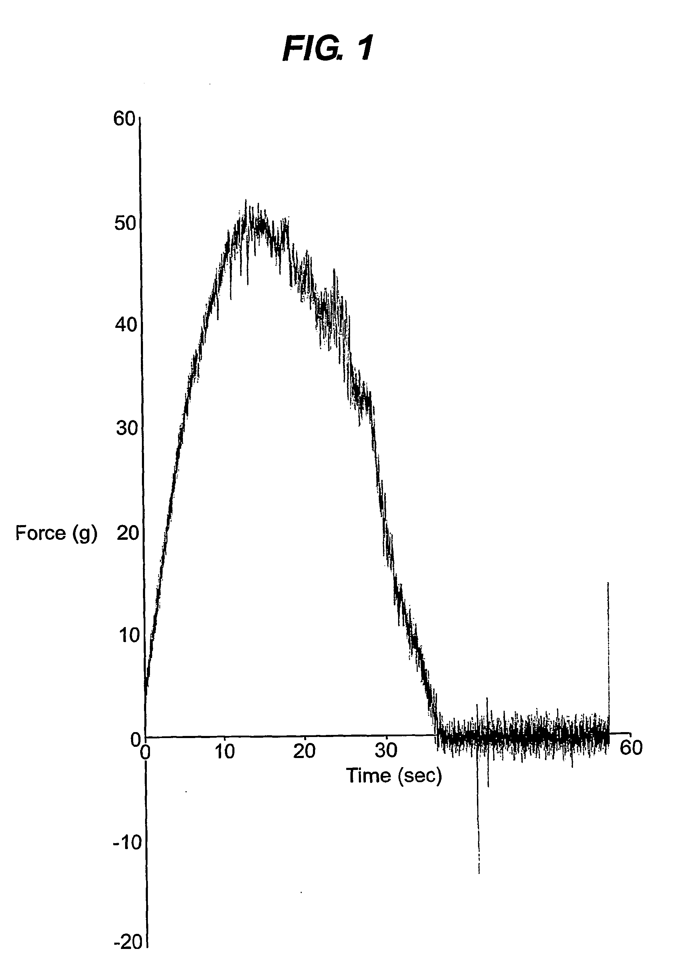

An animal chew can be characterised with reference to its mechanical properties. The properties of the animal chews described herein were studied by texture analysis using a Stable Micro Systems TA-HDi Texture Analyser, and in particular by studying the "3 point bend" characteristic. In this test, the sample is laid horizontally, supported by 2 fixed bars (at least 80mm apart), and a force is applied to the sample by a bar which moves vertically downwards at a point half way between the two fixed bars. In the tests described herein, the speed of this vertical downward motion is held at 1 mm/sec (so that in figures 1 to 4 herein, the time in seconds and the sample deformation in mm are numerically identical). As the moving bar bends the sample, the force required to maintain the downward motion at the set vertical speed is recorded by the instrument. The test data are thus plotted as force against time (sec) which, as noted above, is equivalent to force against displacement (mm). Figures I to 4 show four sets of test data obtained for four different samples:

Figure 1 presents a typical 3-point bend plot for a dog meat strip;

Figure 2 presents a typical 3-point bend plot for a dog biscuit;

Figure 3 presents a typical 3-point bend plot for a chew of the present invention; and

Figure 4 presents a typical 3-point bend plot for another chew of the present invention.

It is apparent from comparing figure 1 to figures 3 and 4 that a fundamental distinction between meat strips and chews is that the maximum force encountered in bending a meat strip is of the order of tens of grams (which corresponds to tenths of Newtons), whereas for a chew the maximum force is at least several hundred, and more typically over 1000 grams (or at least two Newtons, typically at least 4 Newtons, typically at least 6 Newtons, and typically at least 10 Newtons).

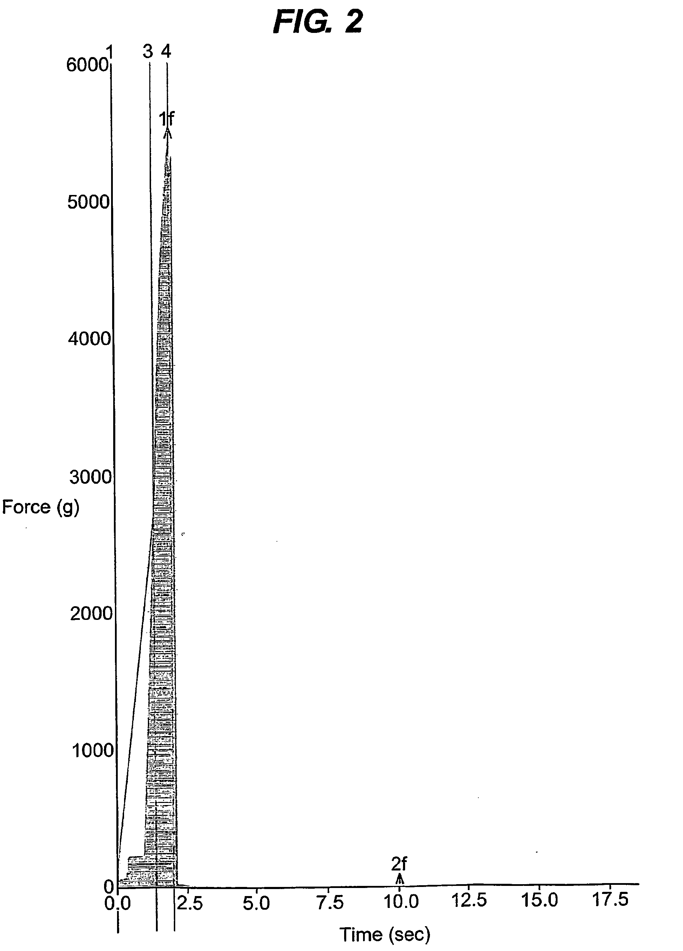

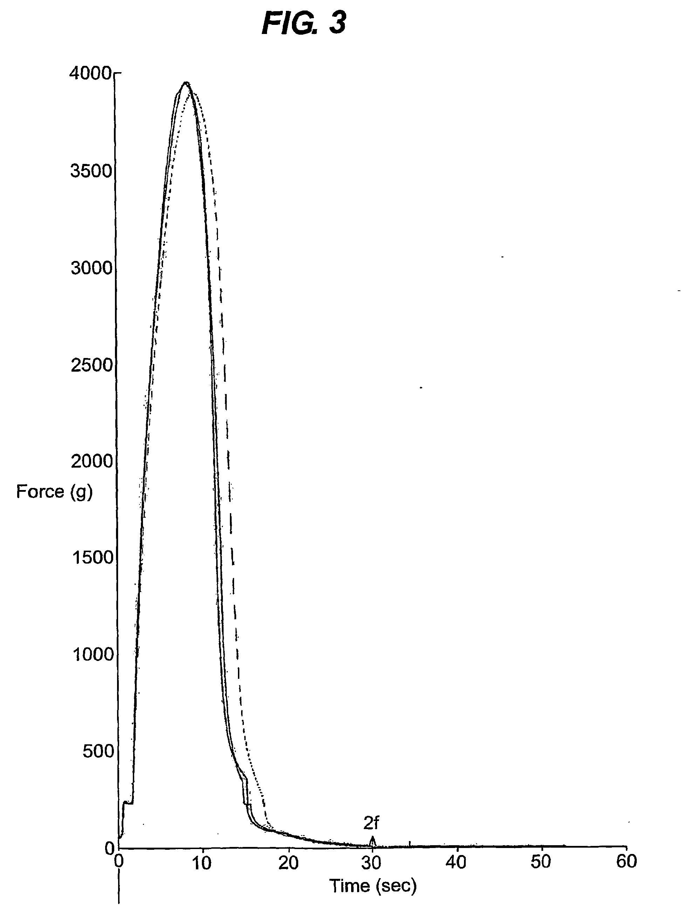

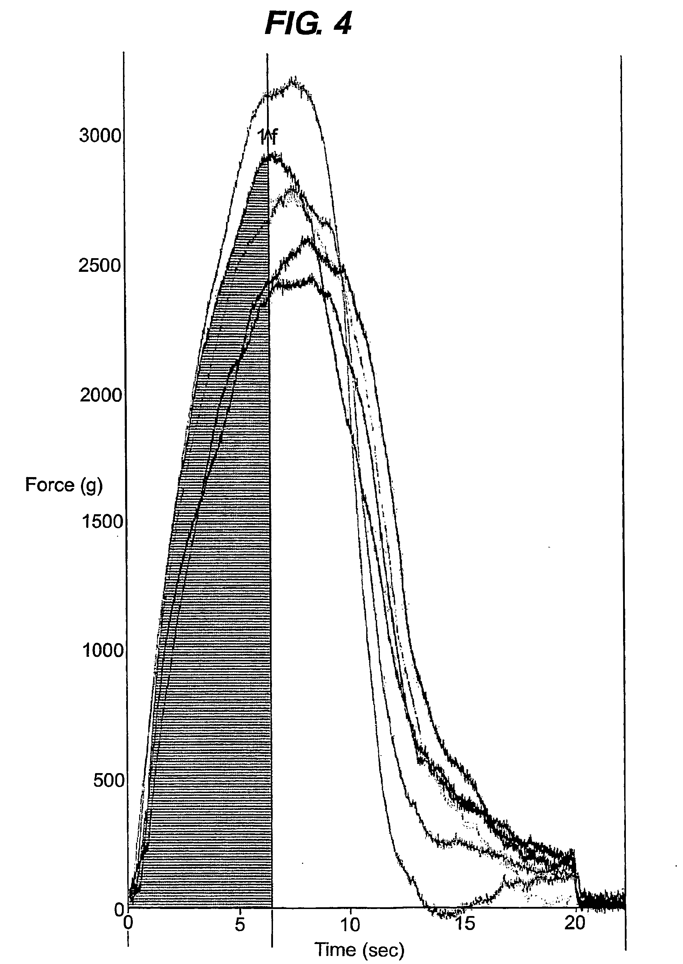

There are also clear differences between biscuits and edible chews. Biscuits are normally produced by a baking process whereas edible chews tend to be made in extrusion cooking and/or moulding type processes. A comparison of figure 2 with figures 3 and 4 shows that there is a clear distinction between biscuits and edible chews in terms of their mechanical properties, and in particular in the point on the curve, beyond the maximum, at which the force has fallen to 10% of its maximum value. For a biscuit this point is reached after a deformation of less than 5 mm; this corresponds to the biscuit breaking abruptly. In chews, by contrast, this point typically occurs after at least 5 mm, typically at least 6 mm, typically at least 7 mm, typically at least 8 mm, and typically at least 10mm. In a chew, the fall to zero force on the graph is more gradual.

The method of measurement of the degree of starch gelatinization is as follows.

The sample is first incubated with an extract of $\alpha$-amyloglucosidase, buffered to pH 4.8 with sodium acetate, at 40°C for 3 hours. The reagents for this step are prepared as follows.

1. The pH 4.8 buffer solution is prepared by adding 32.8 $\pm$ 0.10g of sodium acetate into a 200 ml volumetric flask. 15 ml of glacial acetic acid and then approximately 80 ml of de-ionised water is added to dissolve the solids. The flask is cooled to room temperature and made up to volume with de-ionised water, stoppered and mixed thoroughly.

2. The $\alpha$-amyloglucosidase extract is prepared by transferring all of the buffer solution obtained in step I into a 500 ml beaker, and stirring vigorously with a magnetic stirrer and slowly transferring 2.00 $\pm$ 0.05g of $\alpha$-amyloglucosidase to the beaker. This is then stirred for between 1 and 2 hours, and then filtered through Whatman GF/A (1.6 $\mu$m) filter paper. This solution is stable for 1 week if stored at approximately 4°C.

The hydrolysis step (with amyloglucosidase) then takes place as follows.

1. 1.00g $\pm$ 0.010g of the sample under test is placed into a 150 ml stoppered conical flask and 45 $\pm$ 3 ml of de-ionised water is added and swirled gently to disperse the sample. 2 x 5 ml aliquots of the amyloglucosidase solution are added and the flask is gently swirled. Sample material adhering to the flask walls is rinsed with a small quantity of de-ionised water. The pH of the solution is measured and is adjusted to 4.8 $\pm$ 0.1 pH unit using 0.1 M acetic acid (aqueous solution in de-ionised water). The probe is rinsed with a small amount of de-ionised water and the washings collected in the flask. If the pH is too low, it may be adjusted using 0.1 N sodium acetate (aqueous solution in de-ionised water).

2. The flask is then lightly stoppered and placed in an incubator at 37 $\pm$ 2°C swirling every hour, for not less than 3 hrs and not more than 3.25 hrs.

3. The contents of the flask are then quantitatively transferred to a labelled 250 ml volumetric flask to a volume of 200 ml.

The hydrolysate prepared in this manner is clarified using Carrez reagents (zinc acetate; potassium ferrocyanide) and filtered. Under these conditions the starch is fully hydrolysed to glucose. The reagents for this step are prepared as follows.

1. The Carrez (I) reagents are prepared by weighing 219.0 $\pm$ 0.10g of the zinc acetate dihydrate into a 1000 ml volumetric flask, and adding 30 ml glacial acetic acid. The flask is then filled to volume using de-ionised water, stoppered and shaken. This solution is stable indefinitely.
2. The Carrez (II) reagents are prepared by weighing 106.0g $\pm$ 0.10g of the potassium ferrocyanide into a 1000 ml volumetric flask. The flask is then filled to volume using de-ionised water, stoppered and shaken. This solution is stable indefinitely.

The clarifying step then takes place as follows.

1. 2 x 5 ml aliquots of the Carrez (I) solution are added to the flask containing the hydrolysate and the flask is swirled. 2 x 5 ml aliquots of the Carrez (II) solution are added to the flask and the flask is swirled. The flask is left to stand for between 10 minutes and one hour. The flask is made up to volume with de-ionised water, stoppered and inverted several times to mix the contents.
2. Aliquots of the extract are filtered through Whatman No. 4 filter paper (18 cm), and about 100 ml of filtrate is collected. 5.0ml of the filtrate is transferred into a labelled 100ml volumetric flask. The flask is then filled to volume using de-ionised water, stoppered and shaken thoroughly.

The amount of free glucose in the samples (prior to hydrolysis) is also determined by measuring the glucose levels in samples prepared by repeating the above steps, but without the addition of 2x5 ml aliquots of the amyloglucosidase solution (step I of the hydrolysis section).
The glucose level is quantified spectrophotometrically from the samples. Prior to measurement with the spectrophotometer, hydrogen peroxide is produced from the action of glucose-oxidase on the liberated glucose in the samples (the GOD-PAP reaction), this hydrogen peroxide is used to oxidize 4-amino phenazone and phenol, which produces a colour. This colour is measured spectrophotometrically.
For this step the reagents are prepared as follows.

1. A 0.05g/l glucose standard is prepared by weighing 0.5000 $\pm$ 0.0010g of glucose into the 500 ml volumetric flask, dissolving in de-ionised water to make up to volume, stoppering and mixing. 5.0ml of the above solution is transferred to a 100ml volumetric flask, and filled to volume with de-ionised water, stoppered and mixed thoroughly. Such a solution must be used on the day of preparation.
2. A GOPOD (also known as a GODPOD) reagent, containing greater than 12,000 U / litre of glucose oxidase, greater than 650 U / litre of peroxidase, and 0.04 mM 4-amino-antipyrine in a glucose reagent buffer, is prepared 1 litre at a time. It is prepared according to the conventional technique for glucose determination used in a variety of standard analytical methods, for example AOAC method 995.16. It is stable for three months if kept in an amber flask at 2 to 5 °C.

The spectrophotometer step is then carried out as follows.

1. 4 ml of GODPOD reagent is added to a 50 ml amber stoppered test-tube. 1000$\mu$l of the diluted filtrate obtained as described above is added and immediately stoppered and vortex mixed thoroughly.
2. This step is repeated for separate 1000$\mu$l aliquots of de-ionised water and the diluted (0.05g/l) glucose standard.
3. All of the tubes obtained above are transferred to a darkened cupboard at room temperature for between 60 and 120 minutes.
4. The spectrophotometer sample cuvette is loaded with the solution to be measured, and the absorbance reading is checked to confirm it is stable. The absorbance of the sample is recorded. This is repeated for the glucose standard solution. The absorbance of these solutions is then measured and recorded for a second time.

The following equation is then used to calculate the percentage of the sample that is gelatinized starch, based on the total amount of glucose present in the sample after hydrolysis:

$$\% \mathrm{GelStarch} = \frac{\mathrm{Abs_{SMP}} \times \mathrm{Conc_{STD}} \times \mathrm{Vol\_1_{SMP}} \times \mathrm{Vol\_2_{SMP}} \times 100}{\mathrm{Abs_{STD}} \times \mathrm{Vol\_3_{SMP}} \times \mathrm{Wt_{SMP}} \times 1.111}$$

wherein

| | |
|---|---|
| $\mathrm{Abs_{SMP}}$ = | Absorbance of sample solution |
| $\mathrm{Conc_{STD}}$ = | Concentration of standard solution, g/l (0.05 g/l) |
| $\mathrm{Vol\_1_{SMP}}$ = | Initial sample volume, l, (250ml from step I of the clarifying step) |
| $\mathrm{Vol\_2_{SMP}}$ = | Final sample volume, ml, (100ml after dilution) |
| $\mathrm{Abs_{STD}}$ = | Absorbance of standard solution |
| $\mathrm{Vol\_3_{SMP}}$ = | Volume of aliquot taken for sample dilution, ml, (5.0ml) |
| $\mathrm{Wt_{SMP}}$ = | Weight of sample, g. |

A correction is made for free glucose present in the sample before the hydrolysis step. The calculation just described is repeated for the portion that was not hydrolysed. The percentage resulting from the free glucose is then subtracted from the percentage calculated from the hydrolysed portion, to give the true percentage of the sample which is gelatinized starch.

In order to calculate the percentage of starch gelatinization, it is necessary to know the percentage of starch in the sample. The total percentage of starch in the sample is determined using the Ewers polarimetric method (ISO 6493:2000).

The true percentage of the sample which is gelatinized starch is then divided by the percentage of starch in the sample and multiplied by 100 in order to give the percentage of starch gelatinization.

The present invention is described in greater detail in the examples below by way of illustration.

**Example 1**

A cooker extrusion process was used to produce two chews. An APV MPF65 extruder with a length to diameter ratio of 20 (L/D=20) was employed. The following temperature profile was used: 140°C (cooking zone) / 140°C / 130°C / 110°C / 90°C / 70°C (die). Chew 1 was produced at a screw speed of 140rpm, with a specific mechanical energy (SME) of 120Wh/kg. Comparative chew 2 was produced at a screw speed of 90rpm, with an SME of 70Wh/kg.

Each chew contained 7% by weight of cellulose fibre. For chew 1, which weighed 186 grams, the level of starch gelatinization was 99%. For chew 2, which weighed 220 grams, the level of starch gelatinization was 65%. Each chew was fed to a panel of 4 Labrador dogs, and the chewing time was measured.

| | Mean Chewing Time (min) | Standard Deviation (min) |
|---|---|---|
| Chew 1 (186g, 99% gelatinized) | 19.1 | 7.0 |
| Chew 2 (220g, 65% gelatinized) - comparative | 10.3 | 1.3 |

A t-test shows a 90% confidence that the more highly gelatinized chew has a longer lasting time, even though it is about 15% lower in weight than the less gelatinized chew.

**Example 2**

A cooker extrusion process was used to produce two chews. An APV MPF65 extruder with a length to diameter ratio of 20 (L/D=20) was employed. The following temperature profile was used: 140°C (cooking zone) / 140°C / 130°C / 110°C / 90°C / 70°C (die). Chew 3 was produced at a screw speed of 140rpm, with a specific mechanical energy (SME) of 168Wh/kg. Comparative chew 4 was produced at a screw speed of 90rpm, with an SME of 108 Wh/kg.

Each contained 7% by weight cellulose fibre. For chew 3, which weighed 33 grams, the level of starch gelatinization was 99%. For chew 4, which weighed 32 grams, the level of starch gelatinization was 65%. These chews were fed to two Labrador retrievers, on separate feeding occasions, with the following measured chewing times.

| | Chewing Time (sec) DOG A | Chewing Time (sec) DOG B |
|---|---|---|
| Chew 3 (33g, 99% gelatinized) | 325 | 200 |

(continued)

|  | Chewing Time (sec) DOG A | Chewing Time (sec) DOG B |
|---|---|---|
| **Chew 4 (32g, 65% gelatinized) - comparative** | 48 | 61 |

It can be seen that the more gelatinized chew 3 gave much longer lasting time, despite being only very marginally heavier than chew 4.

**Claims**

1.   Use of gelatinized starch for the purpose of increasing the lasting time of an animal chew wherein the level of starch gelatinization is greater than 90% and the starch is present in the animal chew at a level of at least 35%.

2.   Use according to claim 1 in which the level of gelatinization is greater than 95%.

3.   Use according to claim 1 or claim 2 in which the chew further comprises fibre.

4.   Use according to claim 3 in which the fibre is insoluble fibre.

5.   Use according to claim 4 in which the fibre is cellulose.

6.   Use according to any of claims 3 to 5 in which the proportion of fibre is in the range 2 to 15%.

7.   Use according to any of the preceding claims in which the animal chew does not contain any plasticizer.

8.   An animal chew comprising gelatinized starch having a gelatinization level of greater than 90% and in which the proportion of starch is greater than or equal to 35%.

9.   A chew according to claim 8 further comprising fibre.

10.   A chew according to claim 9 in which the proportion of fibre is in the range of 2 to 15%.

11.   A chew according to claim 9 or 10 wherein said fibre is insoluble.

12.   A chew according to any of claims 8 to 11 which contains no plasticizer.

**Patentansprüche**

1.   Verwendung verkleisterter Stärke zum Zwecke der Erhöhung der Haltbarkeitsdauer eines Kauspielzeuges für Tiere, wobei der Stärkeverkleisterungsgrad höher als 90% ist und die Stärke im Kauspielzeug für Tiere bei einem Gehalt von wenigstens 35% vorliegt.

2.   Verwendung nach Anspruch 1, **dadurch gekennzeichnet, dass** der Verkleisterungsgrad höher als 95% ist.

3.   Verwendung nach Anspruch 1 oder Anspruch 2, **dadurch gekennzeichnet, dass** das Kauspielzeug weiter Fasermaterial umfasst.

4.   Verwendung nach Anspruch 3, **dadurch gekennzeichnet, dass** das Fasermaterial unlösliches Fasermaterial ist.

5.   Verwendung nach Anspruch 4, **dadurch gekennzeichnet, dass** das Fasermaterial Zellulose ist.

6.   Verwendung nach einem der Ansprüche 3 bis 5, **dadurch gekennzeichnet, dass** der Anteil des Fasermaterials im Bereich von 2 bis 15% liegt.

**7.** Verwendung nach einem der vorangehenden Ansprüche, **dadurch gekennzeichnet, dass** das Kauspielzeug für Tiere keinen Weichmacher enthält.

**8.** Kauspielzeug für Tiere, das verkleisterte Stärke mit einem Verkleisterungsgrad von mehr als 90% aufweist und in dem der Stärkeanteil höher als oder gleich 35% ist.

**9.** Kauspielzeug nach Anspruch 8, das weiter Fasermaterial umfasst.

**10.** Kauspielzeug nach Anspruch 9, **dadurch gekennzeichnet, dass** der Anteil an Fasermaterial im Bereich von 2 bis 15% liegt.

**11.** Kauspielzeug nach Anspruch 9 oder 10, **dadurch gekennzeichnet, dass** das Fasermaterial unlöslich ist.

**12.** Kauspielzeug nach einem der Ansprüche 8 bis 11, das keinen Weichmacher enthält.


**Revendications**

**1.** Utilisation d'amidon gélatinisé afin d'accroître la durée de vie d'un article à mâcher pour animal, où

- le niveau de gélatinisation de l'amidon est supérieur à 90 %, et
- l'amidon est présent dans l'article à mâcher pour animal dans une proportion d'au moins 35 %.

**2.** Utilisation selon la revendication 1, le niveau de gélatinisation étant supérieur à 95 %.

**3.** Utilisation selon la revendication 1 ou 2, l'article à mâcher comprenant en outre une fibre.

**4.** Utilisation selon la revendication 3, la fibre étant une fibre insoluble.

**5.** Utilisation selon la revendication 4, la fibre étant une cellulose.

**6.** Utilisation selon l'une quelconque des revendications 3 à 5, la proportion de fibre étant comprise dans la plage de 2 à 15 %.

**7.** Utilisation selon l'une quelconque des revendications précédentes, l'article à mâcher pour animal ne contenant aucun plastifiant.

**8.** Article à mâcher pour animal comprenant de l'amidon gélatinisé dont le niveau de gélatinisation est supérieur à 90 % et dans lequel la proportion d'amidon est supérieure ou égale à 35 %.

**9.** Article à mâcher selon la revendication 8, comprenant en outre une fibre.

**10.** Article à mâcher selon la revendication 9, dans lequel la proportion de fibre est comprise dans la plage de 2 à 15 %.

**11.** Article à mâcher selon la revendication 9 ou 10, dans lequel ladite fibre est insoluble.

**12.** Article à mâcher selon l'une quelconque des revendications 8 à 11, qui ne comprend aucun plastifiant.

## FIG. 1

## FIG. 2

## FIG. 3

## FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5827565 A
- US 6086940 A
- US 4364925 A
- EP 0909536 A
- EP 1219177 A
- WO 0150882 A

- WO 03088740 A
- US 20030219516 A
- GB 1076676 A
- EP 1023841 A
- US 20030168020 A

**Non-patent literature cited in the description**

- The Technology of Extrusion Cooking. Blackie Academic and Professional, 1994